# EUROPEAN PATENT SPECIFICATION

(11) **EP 2 292 698 B1**
(45) Date of publication and mention of the grant of the patent: **28.12.2016**
(21) Application number: 09769975.5
(22) Date of filing: 22.05.2009
(51) Int. Cl.: C08L 97/02, C08L 23/10, C08L 23/16, C08L 23/26, C08L 53/02, C08L 101/00

(54) **THERMOPLASTIC RESIN COMPOSITION, METHOD FOR PRODUCING SAME, AND MOLDINGS**
THERMOPLASTISCHE HARZZUSAMMENSETZUNG, VERFAHREN ZU IHRER HERSTELLUNG UND FORMEN DAFÜR
COMPOSITION DE RÉSINE THERMOPLASTIQUE, SON PROCÉDÉ DE FABRICATION, ET OBJETS MOULÉS

(30) Priority: 23.06.2008 JP 2008163762
(43) Date of publication of application: 09.03.2011
(73) Proprietor: Toyota Boshoku Kabushiki Kaisha, Kariya-shi, Aichi 448-8651 (JP)
(72) Inventor: HASHIBA Masanori, Kariya-shi Aichi 448-8651 (JP)
(74) Representative: TBK
(86) International application number: PCT/JP2009/059461
(87) International publication number: WO 2009/157265

(56) References cited:
- WO-A1-03/070824
- WO-A1-2004/076044
- WO-A1-2009/054262
- JP-A- 9 040 877
- JP-A- 9 157 486
- JP-A- 10 265 614
- JP-A- 2002 003 693
- JP-A- 2004 155 955
- JP-A- 2004 155 956

## Description

### [FIELD OF THE INVENTION]

The present invention relates to a thermoplastic resin composition and a production method thereof, and to a molded article. Specifically, the present invention relates to a thermoplastic resin composition containing a vegetable material in a large amount of 40% to 95% by weight, and a production method
thereof, and to a molded article.

### [BACKGROUND ART]

In recent years, a vegetable material such as kenaf which grows fast and has large carbon dioxide absorption has been noticed from the viewpoints of reduction in carbon dioxide emission amount, carbon dioxide immobilization, and the like. And a combined use of the vegetable material with a resin has been expected.

However, it is considerably difficult to mix a large amount of the vegetable material with a resin and to further mold the thus-obtained composite material. This is because of the difficulty of imparting a satisfactory fluidity which is equivalent to that of the conventional resin to the composite material. Technologies for handling the composite material containing a large amount of the vegetable material are disclosed in the following Patent Documents 1 and 2.

[PATENT DOCUMENT 1]
   Japanese Patent Application Publication No. JP-A 2005-105245
[PATENT DOCUMENT 2]
   Japanese Patent Application Publication No. JP-A 2000-219812

JP H10-265614 (A) relates to a thermoplastic resin composition which contains a cellulosic substance and whish is prepared by melt mixing and kneading 20-97 pts.wt. styrene resin (A), 80-3 pts.wt. cellulosic substance (B) (the sum of ingredients A and B is 100 pts.wt.), and 0.1-20 pts.wt. compd. and/or polymer (C) having at least one functional group and a wt. average mol.wt. of 300-10,000 at 120-220 °C with a mixing roll.

EP1477524 (A1) related to woody synthetic resin compositions comprising: (A) from 5 to 95 parts by weight of a thermoplastic resin; (C) from 5 to 95 parts by weight of a vegetable cellulose; and (B) from 0.1 to 10 parts by weight, based on 100 parts by weight of (A) + (C), of an ultrahigh molecular weight polymer having a viscosity-average molecular weight of 1,200,000 or above, wherein the thermoplastic resin (A) is made of a polyolefin-based composition (J).

### [DISCLOSURE OF THE INVENTION]

### [PROBLEMS THAT THE INVENTION IS TO SOLVE]

PATENT DOCUMENT 1 suggests that problems such as a failure in obtaining satisfactory shape and form in a product occur in injection molding since fluidity of a resin composition is remarkably reduced in the case where a content of a kenaf fiber exceeds 50% by weight. On the other hand, PATENT DOCUMENT 2 suggests that, in the case where only a vegetable fiber is added to a resin without adding rosin or a plasticizer to the resin, it is difficult to lead to uniformly dispersing of the vegetable fiber, and affinity between the resin and the vegetable material is poor, thereby resulting in a material that has inferior strength and the like, lacks in quality uniformity, and has poor practicability.

It is indicated that each method of PATENT DOCUMENTS 1 and 2 has difficulty producing a thermoplastic resin composition which is capable of injection molding and is containing a vegetable material in a large amount of no less than 50% by weight.

The present invention has been accomplished in view of the above-described circumstances, and an object thereof is to provide a thermoplastic resin composition that contains a vegetable material in a large amount of 40% to 95% by weight, that is capable of injection molding, and that is excellent in impact resistance, a method for producing the same and a molded article consisting of the thermoplastic resin composition.

### [MEANS FOR SOLVING THE PROBLEMS]

The present invention is as follows.
(1) A thermoplastic resin composition characterized in that the composition comprises (A) a vegetable material, (B) a thermoplastic resin, and (C) at least one thermoplastic polymer component selected from the group consisting of (C1) a thermoplastic polymer component and (C2) a thermoplastic polymer component, that the content of the vegetable material (A) is in the range from 40% to 95% by weight based on 100% by weight of the total content of the vegetable material (A), the thermoplastic resin (B) and the thermoplastic polymer component (C), that the thermoplastic polymer component (C1) is consisting of a hydrogenated styrene-based thermoplastic elastomer and a maleic anhydride-modified thermoplastic resin, and that the thermoplastic polymer component (C2) is a hydrogenated acid-modified styrene-based thermoplastic elastomer.
(2) The thermoplastic resin composition according to (1) above, wherein the content of the thermoplastic polymer component (C) is in the range from 1% to 30% by weight.
(3) The thermoplastic resin composition according to (1) or (2) above, wherein the thermoplastic resin (B) is a polypropylene and/or an ethylene propylene copolymer.
(4) The thermoplastic resin composition according to (3) above, wherein the maleic anhydride-modified thermoplastic resin is an acid-modified polypropylene having an acid value of 5 or more and a weight-average molecular weight of 10,000 to 200,000.
(5) A production method of the thermoplastic resin composition according to any one of (1) to (4) above, characterized by comprising a mixing process for mixing the vegetable material (A) with the thermoplastic resin (B) and the thermoplastic polymer component (C) while melting the thermoplastic resin (B) and the thermoplastic polymer component (C) using a mixing melting machine, and a pelletizing process for pressing the mixture obtained in the mixing process to form a pellet.
(6) The production method of the thermoplastic resin composition according to (5) above, wherein the mixing melting machine has a mixing chamber for mixing and a mixing blade disposed in the mixing chamber, and wherein the mixing process is a process in which the thermoplastic resin (B) and the thermoplastic polymer component (C) molten by rotation of the mixing blade and the vegetable material (A) are mixed in the mixing chamber.
(7) A molded article characterized by being obtained by injection molding of the thermoplastic resin composition according to any one of (1) to (4) above.

### [EFFECT OF THE INVENTION]

According to the thermoplastic resin composition of the present invention, although the composition contains a vegetable material in a large amount of 40% to 95% by weight, injection molding can be conducted, being excellent in impact resistance. Therefore, in a molded article obtained by the thermoplastic resin composition, excellent impact resistance can be achieved. More excellent flexibility can be achieved.

In the case where the content of the thermoplastic polymer component (C) is in the range from 1% to 30% by weight, particularly excellent impact resistance can be achieved.

Since the styrene-based thermoplastic elastomer in the thermoplastic polymer component (C1) is a hydrogenated styrene-based thermoplastic elastomer, particularly excellent impact resistance can be achieved.

In the case where the thermoplastic resin (B) is a polypropylene and/or an ethylene propylene copolymer, particularly excellent impact resistance can be achieved.

In the case where the maleic anhydride-modified thermoplastic resin is an acid-modified polypropylene having an acid value of 5 or more and a weight-average molecular weight of 10,000 to 200,000, compatibility between the vegetable material (A) and thermoplastic resin (B) is excellent, dispersibility and adherence of the components in the resultant thermoplastic resin composition are excellent, and particularly excellent impact resistance can be achieved.

By using an acid-modified hydrogenated styrene-based thermoplastic elastomer as the thermoplastic polymer component (C2), compatibility between the vegetable material (A) and thermoplastic resin (B) is excellent, dispersibility and adherence of the components in the resultant thermoplastic resin composition are excellent, and particularly excellent impact resistance can be achieved.

According to the method for producing a thermoplastic resin composition of the present invention, a thermoplastic resin composition can be obtained which contains a vegetable material in a large amount of 40% to 95% by weight, is capable of injection molding, and is excellent in impact resistance.

In the case where the mixing melting machine has a mixing chamber for mixing and a mixing blade disposed in the mixing chamber, and wherein the mixing process is a process in which the thermoplastic resin (B) and the thermoplastic polymer component (C) molten by rotation of the mixing blade and the vegetable material (A) are mixed in the mixing chamber, a thermoplastic resin composition can be efficiently obtained which contains a vegetable material (A) in the thermoplastic resin (B) and thermoplastic polymer component (C), and is capable of injection molding, in particular.

According to the molded article of the present invention, impact resistance can be achieved while containing a vegetable material in a large amount of 40% to 95% by weight. Further, excellent flexibility can be obtained.

### [BRIEF DESCRIPTION OF THE DRAWINGS]

Fig. 1 is a graph showing a correlation between the content of the styrene-based thermoplastic elastomer and deflection amount or flexural modulus;
Fig. 2 is a graph showing a correlation between the content of the acid-modified thermoplastic resin and deflection amount or flexural modulus;
Fig. 3 is a schematic view showing the production method of the thermoplastic resin composition of the present invention;
Fig. 4 is a schematic sectional view showing one example of a mixing melting machine;
Fig. 5 is a schematic side view showing one example of mixing blades provided in the mixing melting machine; and
Fig. 6 is a schematic perspective view illustrating an example of an essential part of a roller disc die-type molding machine.

### [EXPLANATION OF THE REFERENCE NUMBERS]

1: mixing melting machine, 3: mixing chamber, 5: rotating shaft, 10 and 10a to 10f: mixing blade, 12: helical blade, 13: material supplying chamber, 500: roller disc die molding machine (pelletizing machine), 50: roller disc die molding part (pelletizing part), 51: disc die, 511: through hole, 512: main rotation shaft insertion hole, 52: press roller, 521: irregularity, 53: main rotation shaft, 54: press roller fixed shaft, 55: cutting blade.

### [BEST MODE FOR CARRYING OUT THE INVENTION]

Hereinafter, the present invention is described in detail.

### [1] Thermoplastic Resin Composition

The thermoplastic resin composition of the present invention is characterized in that the composition comprises (A) a vegetable material, (B) a thermoplastic resin, and (C) at least one thermoplastic polymer component selected from the group consisting of (C1) a thermoplastic polymer component and (C2) a thermoplastic polymer component, that the content of the vegetable material (A) is in the range from 40% to 95% by weight based on 100% by weight of the total content of the vegetable material (A), the thermoplastic resin (B) and the thermoplastic polymer component (C), that the thermoplastic polymer component (C1) is consisting of a styrene-based thermoplastic elastomer and an acid-modified thermoplastic resin, and that the thermoplastic polymer component (C2) is an acid-modified styrene-based thermoplastic elastomer.

### <1> Vegetable Material (A)

The "vegetable material (A)" is a material derived from a plant. The vegetable material may be a vegetable material obtained from various kinds of plants such as kenaf, jute hemp, manila hemp, sisal hemp, gampi, Mitsumata, Kozo, banana, pineapple, coconut, corn, sugarcane, bagasse, palm, papyrus, reed grass, esparto, Sabi grass, oat, rice plant, bamboo, various conifer trees (Japanese cedar, Japanese cypress, and others), broad leaf tree, cotton and others. The vegetable material may be used singly or in combination of two or more types thereof. Among these, kenaf is preferred. The kenaf is a very fast growing annual grass and has excellent absorbitity of carbon dioxide so that it can contribute to reducing an amount of carbon dioxide in the air, thus effectively utilizing forest resources and others.

The segment of the plant used as the plant fiber is not particularly limited so long as the segment comprises a segment constituting the plant such as non-woody parts, woody parts, leaf parts, stalk section and root parts. Furthermore, only a specific segment thereof may be used or a different segment with two parts or more may be used.

The shape of the vegetable material (vegetable material before mixing) contained in the thermoplastic resin composition of the present invention is not particularly limited. The shape may be fibrous or non-fibrous (including powder, crushed form, chip-like form, infinite form, etc.).

The kenaf according to the present invention is an easy-growing annual grass having a woody stem and a plant classified into malvaceae in the present invention. The kenaf includes hibiscus cannabinus and hibiscus sabdariffa of scientific names, and further includes Indian hemp, Cuban kenaf, kenaf, roselle, mesta, bimli hemp, ambary hemp, Bombay hemp and the like of common names.

The jute according to the present invention is a fiber obtained from a jute hemp. The jute hemp includes a hemp including ouma (Corchorus capsularis L.), Jew's mallow, East Indian mallow, Mulukhiyya and a plant in Tiliacea.

### <2> Thermoplastic Resin (B)

The "thermoplastic resin (B)" is a resin having thermoplasticity and is not an acid-modified thermoplastic resin such as a thermoplastic polymer component (C1) mentioned later. The thermoplastic resin (B) is not particularly limited and various thermoplastic resins may be used. Example of the thermoplastic resin (B) include a polyolefin such as polypropylene and polyethylene, a polyester resin such as an aliphatic polyester resin including polylactic acid, polycaprolactone and polybutylene succinate, and an aromatic polyester resin including polyethylene terephthalate, polybutylene terephthalate and polytrimethylene terephthalate, a polystyrene, an acrylic resin (that is obtained using a methacrylate and/or acrylate, and the like), a polyamide resin such as nylon, a polycarbonate resin, a polyacetal resin, an ABS resin and the like. The resin may be used singly or in combination of two or more types thereof.

The polyester resin is preferably a polyester resin having biodegradability (hereinafter, referred to simply as "biodegradable resin"). Examples of the biodegradable resin include (1) a hydroxycarboxylic acid-based aliphatic polyester such as a homopolymer of hydroxycarboxylic acid including lactic acid, malic acid, glucosic acid or 3-hydroxybutyric acid and a copolymer using at least one of the above-listed hydroxycarboxylic acids, (2) a caprolactone-based aliphatic polyester such as polycaprolactone and a copolymer of at least one of the above-listed hydroxycarboxylic acid and caprolactone, (3) a dibasic acid polyester such as polybutylene succinate, polyethylene succinate and polybutylene adipate, and the like.

Among these, polylactic acid, a copolymer of lactic acid and a hydroxycarboxylic acid except lactic acid, polycaprolactone, and a copolymer of caprolactone and at least one kind of a hydroxycarboxylic acid are preferable. Polylactic acid is particularly preferable. The biodegradable resin may be used singly or in combination of two or more types thereof.

It is noted that the lactic acid includes L-lactic acid and D-lactic acid and that the lactic acid may be used singly or in combination.

Among the exemplified thermoplastic resin (B), at least one of a polyolefin, a polyester resin and a mixed resin of a polylactic acid in a polyester resin with other resins such as a polylactic acid alloy including a mixed resin of a polylactic acid and at least one type of a polystyrene, an ABS, a nylon, a polycarbonate, a polypropylene and a polybutylene succinate is preferred. Among these, a polyolefin is preferable and at least one of a polypropylene (homopolymer), a mixed resin of a polyolefin containing a polypropylene, and an olefin-copolymerized resin having a structural unit derived from propylene is particularly limited. Examples of the mixed resin of a polyolefin containing a polypropylene include a mixed resin of a polypropylene and a polyethylene. Examples of the olefin-copolymerized resin having a structural unit derived from propylene include an ethylene propylene copolymer including a random copolymer and a block copolymer. The polyolefin may be used singly or in combination of two or more types thereof. Among these, a polypropylene (homopolymer) and/or an ethylene propylene copolymer are particularly preferred.

### <3> Thermoplastic Polymer Component (C)

The thermoplastic polymer component (C) is a component containing a thermoplastic polymer component (C1) and a thermoplastic polymer component (C2). The thermoplastic polymer component (C) may contain either of the thermoplastic polymer component (C1) or the thermoplastic polymer component (C2). And the thermoplastic polymer component (C) may contain both of them.

Among these, the thermoplastic polymer component (C1) is a styrene-based thermoplastic elastomer and an acid-modified thermoplastic resin, and the thermoplastic polymer component (C2) is an acid-modified styrene-based thermoplastic elastomer.

### <4> Thermoplastic Polymer Component (C1)

The "styrene-based thermoplastic elastomer " is a copolymer containing a structural unit derived from an aromatic vinyl compound such as styrene. The structural unit derived from the aromatic vinyl compound is contained as an aromatic vinyl polymer block such as polystyrene block, and functions as a hard segment in the styrene-based thermoplastic elastomer. The styrene-based thermoplastic elastomer is hydrogenated. In particular, when the thermoplastic resin (B) contains an olefin-based thermoplastic resin,the hydrogenated styrene-based thermoplastic elastomer is preferably used. It is noted that the styrene-based thermoplastic elastomer is not an acid-modified styrene-based thermoplastic elastomer mentioned later.

Examples of the aromatic vinyl compound forming to the styrene-based thermoplastic elastomer include styrene, an alkylsubstituted styrene such as α-methyl styrene, o-methyl styrene, m-methyl styrene, p-methyl styrene and 1,3-dimethyl styrene, vinyl naphthalene, vinyl anthrathene and the like. The compound may be used singly or in combination of two or more types thereof. Among these, styrene is particularly preferred.

The styrene-based thermoplastic elastomer usually contains a structural unit derived from an aromatic vinyl compound of no less than 5% by mol and 80% or less by mol based on 100% by mol of the total structural unit.

A polymeric part except the above-mentioned aromatic vinyl polymer block for the styrene-based thermoplastic elastomer may be formed by any monomer so long as elastomeric property can be provided. It is usually formed using a conjugated diene. Examples of the conjugated diene include butadiene, isoprene, 1,3-pentadiene, 2,3-dimethyl-1,3-butadiene and the like. The compound may be used singly or in combination of two or more types thereof.

A reference non-hydrogenated styrene-based thermoplastic elastomer is hereinafter referred to as simply "non-hydrogenated styrene-based thermoplastic elastomer". The elastomer may be used singly or in combination of two or more types thereof.

Examples of the hydrogenated styrene-based thermoplastic elastomer include a hydrogenated styrene butadiene copolymer, a hydrogenated styrene isoprene copolymer, and the like. Examples of the hydrogenated styrene butadiene copolymer include a hydrogenated styrene butadiene random copolymer (HSBR), and a styrene ethylene butylene styrene block copolymer (SEBS, a hydrogenated styrene butadiene block copolymer). On the other hand, examples of the hydrogenated styrene isoprene copolymer, include a styrene ethylene propylene styrene block copolymer (SEPS, a hydrogenated styrene isoprene block copolymer), and the like.

The reference non-hydrogenated styrene-based thermoplastic elastomer include a styrene butadiene copolymer (non-hydrogenated), a styrene isoprene copolymer (non-hydrogenated), and the like. Among these, examples of the styrene butadiene copolymer include a styrene butadiene block copolymer, and specific example thereof includes a styrene butadiene styrene block copolymer (SBS).

On the other hand, examples of the styrene isoprene copolymer include a styrene isoprene block copolymer, and specific example thereof includes a styrene isoprene styrene block copolymer (SIS), and the like.

Specific examples of the styrene-based thermoplastic elastomer are marketed products such as "Tuftec" (Tuftec H series and Tuftec P series) manufactured by Asahi Kasei Corp., "Septon" manufactured by Kuraray Co., Ltd., "Kraton G" manufactured by Kraton Performance Polymers Inc., "Dynaron" manufactured by JSR Corp., "Hybrar" manufactured by Kuraray Co., Ltd., "Espolex SB" by manufactured by Sumitomo Chemical Co., Ltd., "Tufprene" manufactured by Asahi Kasei Corp., "Asaprene" manufactured by Asahi Kasei Corp., "Solprene" manufactured by Asahi Kasei Corp., "Rabalon" manufactured by Mitsubishi Chemical Corp., "JSR-TR" manufactured by JSR Corp., "JSR-SIS" manufactured by JSR Corp., "Denka STR" manufactured by DENKI KAGAKU KOGYO KABUSHIKI KAISHA, "Quintac" manufactured by Zeon Corp., and "Leostomer" manufactured by Riken Technos Corp. The elastomer may be used singly or in combination of two or more types thereof.

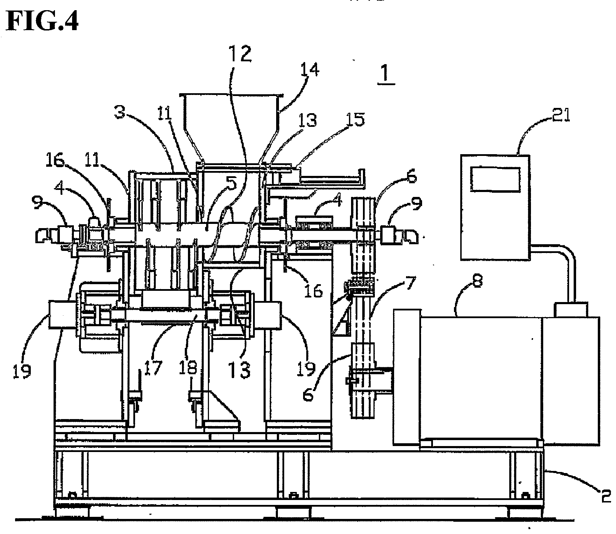

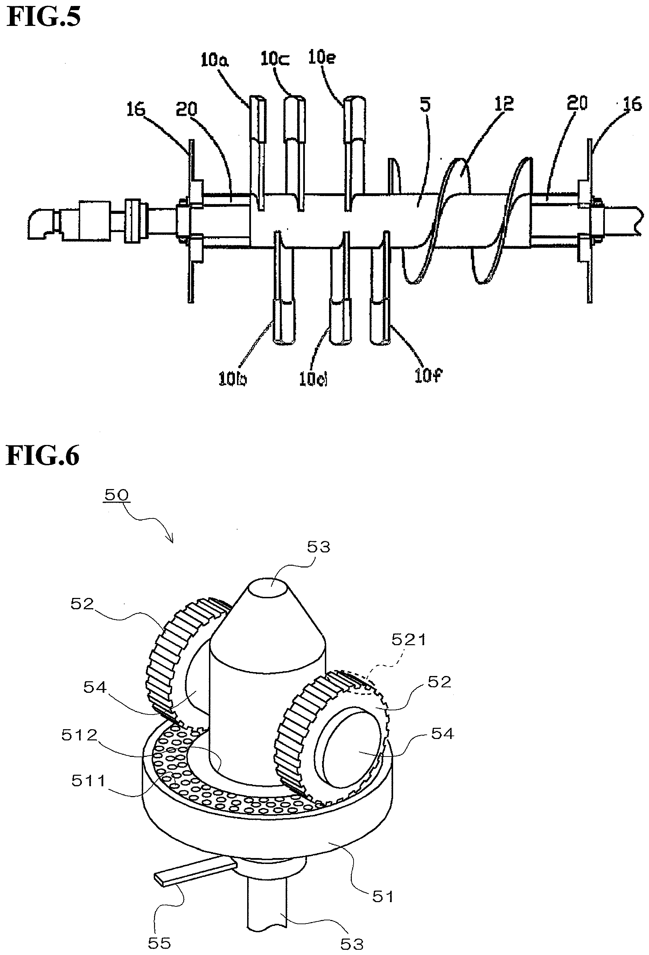

Shore A hardness of the styrene-based thermoplastic elastomer is not particularly limited and is preferably in the range from 25 to 90. When the Shore A hardness is in the above range, mixing is excellent in the case where the mixing melting apparatus shown in Figs. 4 and 5 described later is used. And the vegetable material (A), thermoplastic resin (B) and thermoplastic polymer component (C) can be mixed with favorable dispersibility. The Shore A hardness is more preferably from 30 to 80, and particularly from 35 to 75. The Shore A hardness is measured by Durometer (Type A Durometer) hardness test according to JIS K6253.

In the present invention, a styrene butadiene copolymer is preferable as the above-mentioned styrene-based thermoplastic elastomer. The styrene butadiene copolymer is hydrogenated.

The styrene content Ms in the hydrogenated styrene butadiene copolymer, that is a weight ratio of a structural unit derived from styrene based on the hydrogenated styrene butadiene copolymer is 5% or more by weight and not more than 50% by weight. When the styrene content is in the above range, flexibility is high and impact resistance can be improved. The content Ms is more preferably in the range from 5% to 40% by weight, further preferably from 5% to 30% by weight, and particularly from 5% to 20% by weight.

The "acid-modified thermoplastic resin" is a thermoplastic resin having an acid group. The acid-modified thermoplastic resin may be one in which an acid group is introduced into a thermoplastic resin. (Hereinafter, a polymer in which an acid group is not introduced is referred to as "base polymer".)

In the present invention, when the styrene-based thermoplastic elastomer and acid-modified thermoplastic resin are used in combination, improvement effect of the impact resistance by the acid-modified thermoplastic resin can be obtained in the thermoplastic resin composition. Thus a thermoplastic resin composition containing a vegetable material in a large amount can be obtained for achievement of excellent impact resistance. It is estimated that the function can be obtained by compatibility improvement between the vegetable material and styrene-based thermoplastic elastomer when an acid-modified thermoplastic resin is formulated.

The base polymer for the formation of the acid-modified thermoplastic resin may be at least one thermoplastic resin exemplified as the thermoplastic resin (B). Among these, a polyolefin is preferable, and example thereof includes a polypropylene (homopolymer), a mixed resin of polyolefin including polypropylene, and an olefin copolymeric resin containing a structural unit derived from propylene. Examples of the mixed resin of polyolefin including polypropylene include a mixed resin of polypropylene and polyethylene. In addition, examples of the olefin copolymeric resin containing a structural unit derived from propylene include an ethylene propylene copolymer including a random copolymer and block copolymer. These polyolefins may be used singly or in combination of two or more types thereof. Among these, a polypropylene (homopolymer) is particularly preferred.

When the acid-modified thermoplastic resin is used, the base polymer is preferably in the same quality as the thermoplastic resin (B). The "same quality" means [i] thermoplastic resins that are of the same type and are polymers of the same type of a structural unit (monomer unit); [ii] thermoplastic resins that are of the same type and are polymers of different types of structural units; or [iii] thermoplastic resins that are of the same or different types and are thermoplastic resins having at least one type of a common structural unit and compatibility. The "thermoplastic resins of the same type" means common resins in resins classified into a polyolefin, a polyester resin, an acrylic resin, a polyamide resin, a polycarbonate resin, a polyacetal resin and the like.

Examples of the above [i] include a case in which the both are the same homopolymers or copolymers and chemical property or physical property, including a molecular weight and viscosity is different. Example wherein the both are copolymers includes a case in which both are copolymers having common two or more structural units of the same type and whose proportions of the constituting structural units are different from each other. Examples of the above [ii] include a case in which one is polyethylene and the other is polypropylene, and the like. Examples of the above [iii] include a case in which one is polyethylene and the other is ethylene propylene copolymer, and the like. In the cases of the above [ii] and [iii], a major structural unit contained in an amount of 50% or more by mol in the thermoplastic resin (B) and a major structural unit contained in an amount of 50% or more by mol in the base polymer are preferably the same.

The type of the acid group in the acid-modified thermoplastic resin is an acid anhydride residual group (-CO-O-OC-).

The acid group may be introduced by copolymerization process, or by graft polymerization. The compound for the introduction of the acid group is
maleic anhydride.

The amount of the acid group introducing into the acid-modified thermoplastic resin is not particularly limited. The acid value thereof is preferably 5 or more. It is because when an acid-modified thermoplastic resin having such acid value is used, high addition effect can be obtained while reducing the addition amount of the acid-modified thermoplastic resin. The acid value is more preferably in the range from 10 to 80, further preferably from 15 to 70, and particularly from 20 to 60. The acid value is based on JIS K0070.

The molecular weight of the acid-modified thermoplastic resin is not particularly limited. The weight-average molecular weight thereof is preferably in the range from 10,000 to 200,000. In other words, an acid-modified thermoplastic resin having relatively low molecular weight is preferable. When such acid-modified thermoplastic resin is used, property change of the thermoplastic resin composition due to the addition of the acid-modified thermoplastic resin can be suppressed and the additional effects can be obtained. Further, when an acid-modified thermoplastic resin having the above-mentioned range is used, excellent impact resistance can be achieved. The weight-average molecular weight thereof is more preferably in the range from 15,000 to 150,000, further preferably from 25,000 to 120,000, and particularly from 35,000 to 100,000. The weight-average molecular weight is based on GPC method.

With the hydrogenated styrene-based thermoplastic elastomer described above being used as the styrene-based thermoplastic elastomer, the base polymer constituting to the acid-modified thermoplastic resin is preferably a polyolefin. Among the polyolefin, a polypropylene, polyethylene, ethylene propylene copolymer, and a mixed resin (alloy) of a polypropylene and polyethylene are preferable. Particularly preferred is a polypropylene. Therefore, as the acid-modified thermoplastic resin, a maleic anhydride modified polypropylene is particularly preferred.

### <5> Thermoplastic Polymer Component (C2)

The "acid-modified styrene-based thermoplastic elastomer" is a styrene-based thermoplastic elastomer having an acid group. The acid-modified styrene-based thermoplastic elastomer can be prepared by acid modification of a styrene-based thermoplastic elastomer, or copolymerization of an aromatic vinyl compound, a conjugated diene and a compound having an acid group. The aromatic vinyl compound and conjugated diene may be the same as those respectively in the above-mentioned styrene-based thermoplastic elastomer. Additionally, the compound having an acid group may be the same as those respectively in the above-mentioned acid-modified thermoplastic resin.

The acid-modified styrene-based thermoplastic elastomer itself has a same function as the thermoplastic polymer component (C1). When the acid-modified styrene-based thermoplastic elastomer is used, a thermoplastic resin composition containing a large amount of a vegetable material can be obtained which leads to an excellent impact resistance. It is estimated that the function can be obtained by compatibility improvement between the vegetable material and the acid-modified styrene-based thermoplastic elastomer. Examples of the acid-modified styrene-based thermoplastic elastomer include "(Tuftec" (Tuftec M series includeing M1911, M1913, M1943 and M1953) manufactured by Asahi Kasei Corp., and the like.

A copolymer forming a skelton in which an acid group in the acid-modified styrene-based thermoplastic elastomer is removed, may be a styrene-based thermoplastic elastomer described above. Among those, a styrene butadiene copolymer is preferable. The polymer
is hydrogenated.

The styrene content Ms and the preferable range of the styrene butadiene copolymer are the same as those described above. Among the styrene butadiene copolymer, a hydrogenated styrene butadiene copolymer is more preferable. In other words, as the acid-modified styrene-based thermoplastic elastomer, an acid-modified hydrogenated styrene butadiene copolymer is more preferable. The styrene content Ms in the acid-modified hydrogenated styrene butadiene copolymer, that is a weight ratio of a structural unit derived from styrene based on the acid-modified hydrogenated styrene butadiene copolymer is 5% or more by weight and not more than 50% by weight. When the styrene content is in the above range, flexibility is high and impact resistance can be improved. The content Ms is more preferably in the range from 5% to 40% by weight, further preferably from 7% to 35% by weight, furthermore preferably from 10% to 30% by weight, and particularly from 15% to 25% by weight.

The type of the acid group in the acid-modified styrene-based thermoplastic elastomer is not particularly limited. The acid group may be the same as that in the above-mentioned acid-modified thermoplastic resin and example thereof includes an acid anhydride residual group, (-CO-O-OC-) and/or a carboxylic acid residual group (-COOH). The acid group is particularly introduced using maleic anhydride, in the same manner for the acid-modified thermoplastic resin.

The content of the acid group introduced in the acid-modified thermoplastic resin is not particularly limited. The acid value thereof is preferably 2 or more, more preferably in the range from 2 to 15, further preferably from 4 to 13, and particularly from 8 to 13. The acid value is based on JIS K0070.

Shore A hardness of the acid-modified styrene-based thermoplastic elastomer is not particularly limited and is preferably in the range from 25 to 90. When the Shore A hardness is in the above range, mixing is efficient in the case where the mixing melting apparatus shown in Figs. 4 and 5 described later is used. And the vegetable material (A), thermoplastic resin (B) and thermoplastic polymer component (C) can be mixed with favorable dispersibility. The Shore A hardness is more preferably from 30 to 80, and particularly from 35 to 75. The Shore A hardness is measured by Durometer (Type A Durometer) hardness test according to JIS K6253.

### <6> Content Ratio of Components

With regard to the component contents in the thermoplastic resin composition of the present invention, the content of the vegetable material (A) is in the range from 40% to 95% by weight base on 100% by weight of the total of the vegetable material (A), thermoplastic resin (B) and thermoplastic polymer component. The content is preferably from 40% to 90% by weight, more preferably from 40% to 80% by weight, and further preferably from 40% to 70% by weight. The content is usually the same as the formulating amount of the vegetable material (A) in the production.

The content of the thermoplastic resin (B) is preferably in the range from 4% to 59% by weight. When the content is in the range, excellent flowability and mechanical strength can be obtained. The content is more preferably from 10% to 55% by weight, further preferably from 15% to 55% by weight, and particularly from 20% to 50% by weight.

The content of the thermoplastic polymer component (C) is preferably in the range from 1% to 30% by weight. When the content is in the range, impact resistance can be improved. The content is more preferably from 2% to 27% by weight, further preferably from 3% to 25% by weight, and particularly from 4% to 22% by weight.

In the case where the thermoplastic polymer component (C1) is used as the thermoplastic polymer component (C), the content of the acid-modified thermoplastic resin is preferably in the range from 5% to 50% by weight based on 100% by weight of the total of the acid-modified thermoplastic resin and styrene-based thermoplastic elastomer. When the content is in the range, compatibility between the vegetable material, thermoplastic resin and styrene-based thermoplastic elastomer may be excellent and high dispersibility of the components can be obtained. The content is more preferably from 6% to 50% by weight, further preferably from 7% to 50% by weight, and particularly from 8% to 50% by weight.

When the thermoplastic polymer component (C1) is used, the content of the acid-modified thermoplastic resin is preferably in the range from 1% to 20% by weight based on the total of the vegetable material (A), thermoplastic resin (B) and styrene-based thermoplastic elastomer and acid-modified thermoplastic resin that are contained in the thermoplastic resin composition of the present invention. The ranging content prevents bleeding of an acid-modified thermoplastic resin from the thermoplastic resin composition and leads to a high compatibilizing effect. The content is more preferably from 1% to 15% by weight, and further preferably from 1.5% to 12% by weight.

The contents of these components are usually the same as the formulating amounts of components used in the production.

The thermoplastic resin composition of the present invention may contain other components in addition to the vegetable material (A), thermoplastic resin (B) and thermoplastic polymer component (C). Examples of the other components include an anti-static agent, a flame retardant, an antibacterial agent, a coloring agent, and the like. The component may be used singly or in combination of two or more types thereof. In the case of containing other components described above, the total content is 10% or less by weight based on 100% by weight of the total of the thermoplastic resin composition.

### [2] Production Method of Thermoplastic Resin Composition

The production method of the thermoplastic resin composition of the present invention is not particularly limited so long as the thermoplastic resin composition is obtained. The order of mixing and the like are not particularly limited. The following methods (1) and (2) can be applied.
(1) It is a production method of the thermoplastic resin composition and is a production method which is characterized by comprising a mixing process for mixing the vegetable material (A) with the thermoplastic resin (B) and the thermoplastic polymer component (C) while melting the thermoplastic resin (B) and the thermoplastic polymer component (C) using a mixing melting machine, and a pelletizing process for pressing the mixture obtained in the mixing process to form a pellet (hereinafter, referred to as "first method").
(2) It is a production method of the thermoplastic resin composition and is a production method which is characterized by comprising a mixing process for mixing the vegetable material (A) with the thermoplastic resin (B) while melting the thermoplastic resin (B) using a mixing melting machine, a pelletizing process for pressing the mixture obtained in the mixing process to form a pellet, a pellet mixing process for mixing the pellet obtained in the pelletizing process and the thermoplastic polymer component (C) to prepare a pellet mixture, and an injection molding process for injection molding of the pellet mixture to prepare a thermoplastic resin composition (that is a molded article consisting of the thermoplastic resin composition) (hereinafter, referred to as "second method").

Materials used in the first method and second method are the same as the vegetable material (A), thermoplastic resin (B), and thermoplastic polymer component (C) mentioned above. Additionally, the amounts to be used are preferably the same as their contents mentioned above. The thermoplastic resin (B) and thermoplastic polymer component (C) may be used in a form of a pellet or compound. From the viewpoint of more favorable mixing in the case of using a mixing melting machine, a pellet is preferable.

The shape of the vegetable material (A) (vegetable material before mixing) is not particularly limited and may be fibrous or non-fibrous. The non-fibrous shape includes a powder (including grains, a spherical powder, etc.), a chip-like form (including plate-like, flaky, etc.), an infinite form (including crushed form), and the like. These may be used singly or in combination of two or more types thereof.

Among the materials above, the fibrous vegetable material (hereinafter, referred to as "vegetable fiber") is a fiber which is taken from a vegetable and has an L/t (that is a ratio of fiber diameter t to fiber length L) of 5.0 to 20,000. In this vegetable fiber, the fiber length L is usually in the range from 0.5 to 300 mm, and the fiber diameter t is usually in the range from 0.01 to 1 mm. The fiber length means a value (L) by actually measuring a fiber length of single vegetable fiber using a ruler without being stretched in the same manner as the direct method according to JIS L1015. On the other hand, the fiber diameter means a value (t) for the same vegetable fiber as that for measuring the fiber length by actually measuring a fiber diameter at the center in the length direction using an optical microscope.

The average fiber length and average fiber diameter of the vegetable fiber are not particularly limited. The average fiber length is preferably 20 mm or shorter. When the vegetable fiber having the average fiber length of 20 mm or shorter is used, effects due to the vegetable fiber can be favorably obtained. The average fiber length is more preferably in the range from 1 to 15 mm, further preferably from 5 to 10 mm, and particularly from 2 to 7 mm. The average fiber length means an average value for a total of 200 fibers by taking out a single fiber one by one at random and actually measuring a fiber length of single fiber using a ruler without being stretched in the direct method according to JIS L1015.

On the other hand, the average fiber diameter is preferably 0.2 mm or shorter. When the vegetable fiber having the average fiber diameter of 0.2 mm or shorter is used, effects due to the vegetable fiber can be favorably obtained. The average fiber diameter is more preferably in the range from 0.01 to 0.15 mm, and particularly from 0.01 to 0.1 mm. The average fiber diameter means an average value for a total of 200 fibers by taking out a single fiber one by one at random and actually measuring a fiber diameter at the center in the length direction using an optical microscope.

Among the materials above, non-fibrous vegetable material (hereinafter, referred to as "non-fibrous vegetable material") is a vegetable material in the form which is not fibrous form taken from a plant. The size thereof is not particularly limited. For example, the maximum length (maximum diameter in the case of grains) is preferably 20 mm or shorter. It is generally 0.1 mm or longer, more preferably in the range from 0.3 to 20 mm, further preferably from 0.3 to 15 mm, and particularly from 0.5 to 10 mm.

In the case where the shape is in the powder form, the average particle diameter is preferably 5.0 mm or smaller. It is generally 0.1 mm or larger, more preferably in the range from 0.2 to 5.0 mm, further preferably from 0.3 to 4.0 mm, furthermore preferably from 0.3 to 3 mm, and particularly from 0.5 to 2 mm. The average particle diameter means a value D50 in a particle size distribution data measured by a particle size analyzer.

In the thermoplastic resin composition obtained by the present invention, shape and size of the vegetable material before mixing may be kept as they are in the thermoplastic resin composition, and they may not be kept. Examples of the case not keeping include a case in which the vegetable material is in a finely-crushed state in the thermoplastic resin composition.

In the case where kenaf is used as the vegetable material, examples of the vegetable fiber include a kenaf fiber and examples of the non-fibrous vegetable material include a kenaf core powder. In the production method for the thermoplastic resin composition of the present invention, as mentioned above, non-fibrous vegetable material can be used. That is to say, a kenaf core powder can be used in the case of kenaf.

The kenaf consists of an outer layer part which is called "bast" and a core material part which is called "core". The bast has a high utility value since it contains a strong fiber, but the core is not adequate to a vegetable fiber though it has a proportion of about 60% by volume in an overall kenaf. Since the core has a smaller apparent specific gravity and is more bulky, the core has a poor handling property, and it is difficult to mix with a resin. The core is usually discarded or used for a fuel. Based on the present method, however, it is possible to obtain a thermoplastic resin composition having excellent mechanical properties and fluidity capable of injection molding in spite of using a kenaf core as the vegetable material.

In the first method, the "mixing melting machine" is a device for mixing and melting the vegetable material (A), thermoplastic resin (B) and thermoplastic polymer component (C). In the second method, it is a device for mixing and melting the vegetable material (A) and thermoplastic resin (B). The machine is a device including an extruder part in these methods. The type of the mixing melting machine is not particularly limited. The following mixing melting machine is particularly preferred. When the mixing melting machine is used, the vegetable material (A) and thermoplastic resin (B) can be favorably mixed..

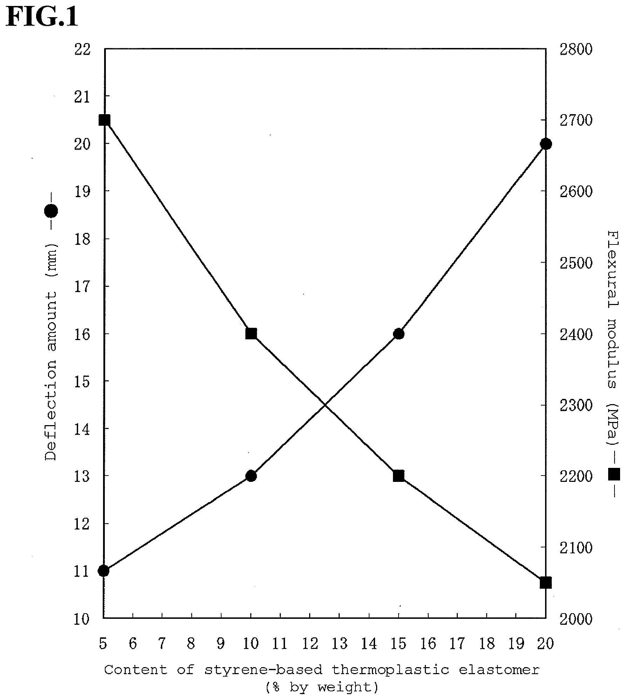

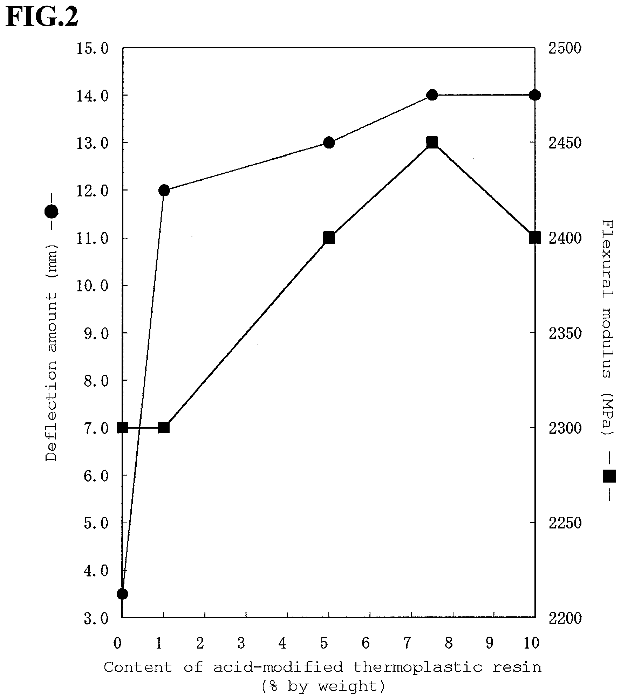

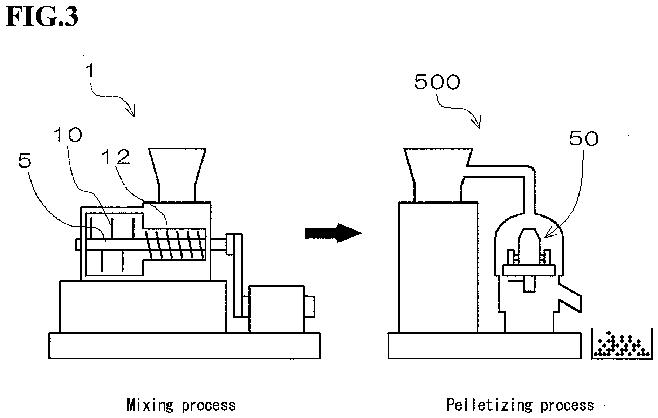

As the mixing melting machine (hereinafter, refer to Fig.3, Fig. 4 (Fig.4 is cited from Fig. 1 of International Publication No. 04/076044 provided in Industrial Property Digital Library of Japanese Patent Office) and Fig. 5 (Fig. 5 is cited from Fig. 2 of International Publication No. 04/076044 provided in Industrial Property Digital Library of Japanese Patent Office)), the mixing melting machine 1 disclosed in International Publication No. 04/076044 is preferred. That is, the mixing melting machine 1 is preferably a mixing melting machine that is provided with a material supplying chamber 13, a mixing chamber 3 communicated with the material supplying chamber 13, a rotating shaft 5 penetrating through the material supplying chamber 13 and the mixing chamber 3 and provided rotatably, a helical blade 12 which is provided on the rotation shaft 5 in the material supplying chamber 13 and feeds the mixed materials (vegetable material and the like) supplied to the material supplying chamber 13 to the mixing chamber 3, and mixing blades 10a to 10f which are provided on the rotation shaft 5 in the mixing chamber 3 and mix the mixed materials.

When the mixing melting machine is used for charging of the mixing material into the mixing melting machine 1 (material supplying chamber 13) and for rotation of the mixing blades 10a to 10f of the mixing melting machine 1, the vegetable material and the thermoplastic resin (and further a thermoplastic polymer component (C) in the first method) are pounded together in such a manner as to be pressed and moved toward an inner wall of the mixing chamber 3, so that the thermoplastic resin (and further a thermoplastic polymer component (C) in the first method) is softened or molten in a short time by energy (heat quantity) of the collision between the materials, mixed with the vegetable material, and then kneaded. The obtained mixture (thermoplastic resin composition before pelletization) exhibits excellent fluidity that enables injection molding.

The mixing blades 10a to 10f are opposed in a shaft direction as being located at positions with a certain angular interval being defined along a circumferential direction of the rotation shaft 5 and formed of at least two mixing blades (10a to 10f) that are provided on the rotation shaft 5 at a mounting angle that narrows the opposed interval in a rotation direction. The mounting angle of the mixing blades 10a to 10f with respect to the rotation shaft 5 is preferably identical from a base to a tip in a radially external direction of the mixing blades 10a to 10f mounted on the rotation shaft 5. Further, it is preferable that each of the mixing blades 10a to 10f has a rectangular shape.

Additionally, the mixing chamber preferably is provided with further a mixing chamber cooling unit that is capable of circulating a cooling medium along walls forming the mixing chamber. With such constitution, it is possible to suppress an excessive temperature rise inside the mixing chamber as well as to suppress (and prevent) decomposition and heat deterioration of the thermoplastic resin (and further a thermoplastic polymer component (C) in the first method).

The conditions for the "mixing" are not particularly limited. The temperature during the mixing is not particularly limited and the temperature of an outer wall of the mixing chamber is preferably controlled to 200°C or lower, more preferably 150°C or lower, and further preferably 120°C or lower, and preferably 50°C or higher, more preferably 60°C or higher, and further preferably 80°C or higher. The temperature may preferably be attained within 10 minutes and more preferably within 5 minutes. Controlling to the high temperature in a short time leads to a rapid evaporation of moisture and the mixing. And it is possible to more effectively suppress the deterioration of the thermoplastic elastomer. Also, the temperature range may preferably be maintained for 15 minutes or shorter and more preferably 10 minutes or shorter.

Further, when the rotation speed of the mixing blades of the mixing melting machine is adjusted, the temperature can be controlled. Specifically, the mixing blades may be controlled so that a rotation speed of the tips is in the range from 5 to 50 m/sec. This rotation speed controlling to the specified range leads to a mixing the thermoplastic resin with the vegetable material more strongly (uniformly) while softening or melting the thermoplastic resin (and further a thermoplastic polymer component (C) in the first method).

Further, an end point in the mixing is not particularly limited and the end point may be decided by a change in torque loaded on the rotation shaft. It is preferable to measure the torque loaded on the rotation shaft and to stop the mixing after the torque has reached a maximum value. Thus, it is possible to mix the mixing material while attaining good mutual dispersibility. Further, it is more preferable to stop the mixing when the torque starts to diminish after having reached the maximum value. It is particularly preferable to stop the mixing within a torque of 40% or higher, and particularly a range from 50% to 80% with respect to the maximum torque. Thus, it is possible to mix the mixing material while attaining good mutual dispersibility as well as to take out the mixture (thermoplastic resin composition before pelletization) from the inside of the mixing chamber at a temperature of 160°C or higher, thereby more reliably preventing the thermoplastic resin composition from adhering to and remaining in the mixing chamber.

The "pelletizing process" is a process of forming pellets by pressing the mixture obtained by the mixing process (See Fig. 3).

The pelletizing method is not particularly limited. In the case where an apparatus provided integrally with the above-mentioned mixing melting machine and a pelletizing machine capable of pelletizing (segmentalizing) until the heat of the obtained thermoplastic resin composition is removed, mixing and pelletizing can be continuously performed to form a pellet. Further, in the case where an apparatus not provided with such pelletizing machine, a massive mixture is subjected to pelletizing to form a pellet. This is because the mixing melting machine usually produces a massive mixture. The massive mixture is usually subjected to crushing before pelletizing. The crushing method is not particularly limited and the conventionally known crushing machine can be used.

In the case where a massive mixture is produced using the mixing melting machine, it is preferable to have a pelletizing process in which an obtained mixture by the mixing process is pressed without heating to form a pellet after the mixing process (See, Fig. 3). When the pelletization with pressing is performed without heating, mechanical properties of the resultant molded article can be maintained at a higher level than the case in which an obtained mixture by the mixing process is subjected to remelting and pelletizing with a conventional method using a twin screw extruder. It is because thermal hysteresis to the mixture can be reduced.

Any device or means may be used for the pelletizing process in which pelletization is performed while pressing without heating. It is particularly preferable to use a compression molding method. Examples of the compression molding method include a roller-type molding method, an extrusion-type molding method, and the like. The method for roller-type molding is a method using a roller molding machine, wherein the mixture is pressed into a dice by a rotating roller being in contact with a die, extruded from the dice, and then molded. Examples of the roller molding machine include a disc die type (roller disc die molding machine) and a ring die type (roller ring die molding machine) that are different from each other by a die shape. In turn, the extrusion-type molding method is a method employing an extrusion-type molding machine, wherein the mixture is pressed into a dice by a rotation of screw auger, extruded from the dice, and then molded. Among the methods for compression molding, the roller disc die molding method is particularly preferred. The roller disc die molding machine used in the method for compression molding has high compression efficiency and is particularly suitable.

Further, in the present method, it is particularly preferable to perform the pelletization by using a roller disc die molding machine 500 specified below (see, Fig. 3, main part is shown in Fig. 6). That is, the device is a roller disc die molding machine (pelletization device) 500 having a roller disc die molding unit 50 provided with a disk die 51 having a plurality of through-holes 511, a press roller 52 rolling on the disc die 51 for pressing a non-pressurized material (mixture) into the through-holes 511, and a main rotating shaft 53 for driving the press roller 52, wherein the disc die 51 has a main rotation shaft insertion hole 512 penetrating in a direction same as the through-holes 511; the main rotation shaft 53 has a press roller fixed shaft 54 inserted into the main rotation shaft insertion hole 512 and provided perpendicularly to the main rotation shaft 53; and the press roller 52 is rotatably supported by the press roller fixed shaft 54 and rolls on a surface of the disc die 51 along with the rotation of the main rotation shaft 53.

The roller disc die molding machine 500 has preferably an irregularity 521 on a surface of the press roller 52 in addition to the above-described construction. Additionally, the machine has preferably a cutting blade 55 that is rotated along with a rotation of the main rotation shaft 53.

According to the roller disc die molding machine 500, the mixture charged from above the main rotation shaft 53 is caught by the surface irregularity 521 provided on the press roller 52 to be pressed into the through-holes 511 and then extruded from a back surface side of the disc die 51 in Fig. 6, for example. The extruded strip-like mixture is cut by the cutting blade 55 into an appropriate length to be pelletized, and the pellets fall down to be collected.

The shape and size of the pelletized thermoplastic resin composition are not particularly limited. The shape is preferably columnar (cylindrical shape is particularly preferred among other preferred columnar shapes). The maximum length of the pellet is preferably 1 mm or longer (usually 20 mm or shorter), more preferably in the range from 1 to 10 mm, and particularly from 2 to 7 mm.

In the case of the first method, the pelletizing process leads to the thermoplastic resin composition of the present invention. On the other hand, in the case of the second method, a pellet mixing process for mixing (dry blending) of the obtained pellet by the pelletizing process and a process for melting the resulting pellet mixture are required. In the second method, when injection molding is conducted, melting and mixing are attained.

Any device or means may be used for the pellet mixing process so long as the pellet (first pellet) obtained by the pelletizing process and a thermoplastic polymer component (C) can be dry blended. Starting materials are subjected to only mixing without melting, in other words, starting materials are subjected to mixing while keeping their shapes before. Examples of the pellet mixing appratus (pellet blender) used in the pellet mixing process include a jar tumbler, a plowshare mixer, a paddle blender, a ribbon blender, a rotary blender, a high-speed rotary blender, a V-type blender, Henschel mixer, a supermixer and the like. These may be used singly or in combination of two or more types thereof.

In the first method, the injection molding process is a process in which the obtained pellet by the pelletizing process is subjected to injection molding to prepare a thermoplastic resin composition. In the second method, the injection molding process is a process in which a pellet mixture is subjected to injection molding to prepare a thermoplastic composition (that is a molded article consisting of a thermoplastic resin composition).

Molding conditions and device used in the injection molding process are not particularly limited and are appropriately selected according to the intended molded article, properties thereof, types of the thermoplastic resin used, and the like.

In the present method, other processes may be provided in addition to the above-mentioned essential processes. Examples of the other processes include a process in which vegetable materials are pressed to prepare a starting pellet before mixing process (starting pellet preparing process). The starting pellet preparing process leads to a thermoplastic resin composition in which gravity difference between the vegetable material (A) and other components (thermoplastic resin (B) and thermoplastic polymer component (C)) can be decreased, workability is improved, localization of the material can be suppressed during mixing, and components are uniformly dispersed. Further, the resultant molded article has higher mechanical strength.

### [3] Molded Article

The molded article of the present invention is injection molded of a thermoplastic resin composition (pelletized thermoplastic resin composition) obtained by the first method. The injection molding is described above. According to the molded article of the present invention, although the molded article contains a vegetable material in a large amount of 40% to 95% by weight, injection molding can be conducted, being excellent in impact resistance. In particular, the molded article has a large deflection amount and adequately large flexural modulus.

The thermoplastic resin composition of the present invention contains a vegetable material in a large amount of 40% to 95% by weight, however, the composition has an excellent fluidity. Therefore, the measuring time during molding (measuring time in injection molding machine) and injection time can be shortened. In addition, a molding cycle can be shortened to improve molding efficiency. Thus a molded article having an excellent impact resistance can be efficiently produced at low cost.

The shape, size, thickness and the like of the molded article of the present invention are not particularly limited. In addition, its use application is not particularly limited. The molded article may be used as an interior material, an exterior material, a structural material and others of an automobile, a railcar, a ship, an aircraft and others. Among them, examples of an automobile supplies include an interior material for automobile, an instrument panel for automobile, an exterior material for automobile and others. Specific examples are a door base material, a package tray, a pillar garnish, a switch base, a quarter panel, a core material for armrest, a door trim for automobile, a seat-structured material, a seat back board, a ceiling material, a console box, a dashboard for automobile, various instrument panels, a deck trim, a bumper, a spoiler, a cowling and others. Other examples are an interior material, an exterior material and a structural material of an architectural structure, furniture and others. That is, a door surface material, a door structural material, a surface material and a structural material for various furnitures (desk, chain, shelf, chest, and others), and others are included. Additionally a package, a container (tray and others), a member for protection, a member for partition and others may be included.

### [EXAMPLE]

Hereinafter, the present invention is explained in detail using Examples.

### [1] Production of Thermoplastic Resin Composition

### (1) Experimental Examples 1 to 17 (Examples 1 to 5, 9 to 12, and 14 to 17)

The following vegetable material (A), thermoplastic resin (B) and thermoplastic polymer component (C) were used in a combination and amount shown in Tables 1 and 2, charged into a material supplying chamber (denoted by 13 in Fig. 4) of a mixing melting machine 1 (it is disclosed in WO2004-076044 and is manufactured by M&F Technology), and the mixed in a mixing chamber (capacity: 5 L; denoted by 3 in Fig. 4). The total amount of the vegetable material (A), thermoplastic resin (B) and thermoplastic polymer component (C) was 700 g. Mixing blades (denoted by 10 in Fig. 3; denoted by 10a to 10f in Fig. 5) were rotated at a rotation speed of 2,000 rpm for the mixing. After a load (torque) applied on the mixing blades started to increase, the stirring was stopped at an end point which was 6 seconds after the load reached a maximum value (exceeding 100%), and the thus-obtained mixture (thermoplastic resin composition before pelletization) was discharged from the mixing melting machine.

Each of the thus-obtained mixture was crushed into pieces each having a size of about 5.0 mm by using a crusher ("Z10-420" (type name) manufactured by Horai Co, Ltd.). And then the pieces were charged at a feeder frequency of 20 Hz into a roller disc die molding machine 500 ("KP280" (type name) manufactured by Kikukawa Iron Works Inc.) having a diameter of through hole (denoted by 511 in Fig. 6) of 4.2 mm to obtain cylindrical pellets having a diameter of about 4 mm and a length of about 5 mm. The obtained pellet was dried in an oven at a temperature of 100°C for 24 hours to prepare each thermoplastic resin composition for Experimental Examples 1 to 17. Thermoplastic resin compositions of Experimental Example 2 and Experimental Example 10 are same, and thermoplastic resin compositions of Experimental Example 8 and Experimental Example 13 are same.

**Table 1**

| Experimental Example ("*" means Comparative Example) | 1 | 2 | 3 | 4 | 5 | * 6 | * 7 | * 8 |
|---|---|---|---|---|---|---|---|---|
| Kenaf core (% by weight) | 40 | 50 | 60 | - | 60 | 60 | - | 50 |
| Kenaf fiber (% by weight) | - | - | - | 60 | - | - | 60 | - |
| PP (% by weight) | 47.5 | 37.5 | 27.5 | 27.5 | 30 | 40 | 40 | 40 |
| Acid-modified PP (% by weight) | 2.5 | 2.5 | 2.5 | 2.5 | - | * - | * - | * - |
| TPS (% by weight) | 10 | 10 | 10 | 10 | - | * - | * - | 10 |
| Acid-modified TPS (% by weight) | - | - | - | - | 10 | * - | * - | - |
| Deflection amount (mm) | 20 | 13 | 10 | 18 | 8 | 2.5 | 3 | 3.5 |
| Flexural modulus (MPa) | 2000 | 2400 | 2800 | 3200 | 2900 | 4500 | 5000 | 2300 |

**Table 2**

| Experimental Example ("*" means Comparative Example) | 9 | 10 | 11 | 12 | *13 | 14 | 15 | 16 | 17 |
|---|---|---|---|---|---|---|---|---|---|
| Kenaf core (% by weight) | 50 | | | | 50 | | | | |
| PP (% by weight) | 42.5 | 37.5 | 32.5 | 27.5 | 40.0 | 39.0 | 35.0 | 32.5 | 30.0 |
| Acid-modified PP (% by weight) | 2.5 | 2.5 | 2.5 | 2.5 | * - | 1.0 | 5.0 | 7.5 | 10 |
| TPS (% by weight) | 5 | 10 | 15 | 20 | 10 | 10 | 10 | 10 | 10 |
| Deflection amount (mm) | 11 | 13 | 16 | 20 | 3.5 | 12 | 13 | 14 | 14 |
| Flexural modulus (MPa) | 2700 | 2400 | 2200 | 2050 | 2300 | 2300 | 2400 | 2450 | 2400 |

### <Vegetable Material (A)>

"Kenaf core": crushed kenaf core having a diameter of not larger than 1.0 mm (by passing the crushed kenaf core through a perforated plate-like sieve having a mesh opening size of 1.0 mm).
"Kenaf fiber": kenaf fiber having an average fiber length of 3 mm (that is an average value for a total of 200 fibers after passing the cut kenaf fibers through a sieve by taking out a single fiber one by one at random and actually measuring a fiber length of single fiber using a ruler without being stretched in the direct method according to JIS L1015).

### <Thermoplastic Resin (B)>

"PP": Polypropylene resin (trade name "NOVATEC NBX03HRS" manufactured by Japan Polypropylene Corp.)

### <Thermoplastic Polymer Component (C1)>

"TPS": Hydrogenated styrene butadiene copolymer (styrene-based thermoplastic elastomer, trade name "Tuftec H1221" manufactured by Asahi Kasei Corp., Shore A hardness; 42, styrene content; 12% by weight)
"Acid-modified PP": Maleic anhydride modified polypropylene (acid-modified thermoplastic resin, "Umex #1001" manufactured by Sanyo Chemical Ind., Ltd., base polymer; polypropylene, weight-average molecular weight; 40,000, melt viscosity; 16,000 mPa·s, acid value; 26)

### <Thermoplastic Polymer Component (C2)>

"Acid-modified TPS": Acid modified hydrogenated styrene butadiene copolymer (acid-modified styrene-based thermoplastic elastomer, trade name "Tuftec H1943" manufactured by Asahi Kasei Corp., Shore A hardness; 67, acid value; 10, styrene content; 20% by weight)

### [2] Production of Molded Article

Each of the thermoplastic resin compositions obtained by Experimental Examples 1 to 17 in [1] above was charged into an injection molding machine (type name "SE100DU" manufactured by Sumitomo Heavy Ind., Ltd.,) and was subjected to molding at conditions of a cylinder temperature of 190°C and mold temperature of 40°C to form specimen having a length of 80 mm, width of 10 mm and thickness of 4 mm.

Flexural modulus and deflection amount of the molded article for each of the molded articles of Experimental Examples 1 to 17 obtained by [2] above was measured. For the measurement of the flexural modulus, the test piece was supported at two supporting points (curvature radius: 5 mm) having a support point distance (L) of 64 mm, and a load was applied from an action point (curvature radium: 5 mm) set at the center of the supporting points at a rate of 2 mm/min to measure in accordance with JIS K7171. For the deflection amount, a stroke of the action point to the broken point in the bending test was counted. These results are shown in Tables 1 and 2. Based on the results of Experimental Examples 9 to 12, a correlation between the content of the styrene-based thermoplastic elastomer and deflection amount or flexural modulus was shown in Fig. 1 for a graph. Based on the results of Experimental Examples 13 to 17, a correlation between the content of the acid-modified thermoplastic resin and deflection amount or flexural modulus was shown in Fig. 2 for a graph.

### [4] Effects of Examples

From the results shown in Table 1, Experimental Example 6 (Comparative Example) is an example in which a thermoplastic polymer component (C) is not contained and deflection amount was 2.5 mm, and flexural modulus was 4,500 MPa.

On the other hand, Experimental Example 8 (Comparative Example) is an example in which a styrene-based thermoplastic elastomer (TPS) was contained instead of a part of the kenaf core in Experimental Example 6 (Comparative Example) and deflection amount was 3.5 mm, and flexural modulus was 2,300 MPa. It is found that when TPS was contained instead of a part of the vegetable material, the flexural modulus was largely lowered by -49% and the deflection amount was remained at 1.4 times.

Experimental Example 2 (Example) is an example in which an acid-modified PP was contained instead of a part of the PP in Experimental Example 8 (Comparative Example) and deflection amount was 1.3 mm, and flexural modulus was 2,400 MPa. It is found that when a part of PP was converted to an acid-modified PP, the deflection amount was drastically improved to 3.7 times (5.2 times against Experimental Example 6) while mostly unchanging the flexural modulus. Such results indicate that combining usage of an acid-modified PP as well as TPS leads to a drastic improvement of impact resistance.

Experimental Example 3 (Example) is an example corresponding to a composition in which a part of the thermoplastic resin (B) in Experimental Example 6 (Comparative Example) was substituted with a thermoplastic polymer composition (C1) and deflection amount was 10 mm, and flexural modulus was 2,800 MPa. When the thermoplastic polymer composition (C1) is used, deflection amount could be dramatically improved to four times and the flexural modulus could be reduced to 62%.

In turn, Experimental Example 5 (Example) is an example corresponding to a composition in which a part of the thermoplastic resin (B) in Experimental Example 6 (Comparative Example) was substituted with a thermoplastic polymer composition (C2) and deflection amount was 8 mm, and flexural modulus was 2,900 MPa. When the thermoplastic polymer composition (C2) is used, deflection amount could be dramatically improved to 3.2 times and the flexural modulus could be reduced to 64%.

In Experimental Example 7 (Comparative Example), deflection amount was 3 mm, and flexural modulus was 5,000 MPa. On the other hand, Experimental Example 4 (Example) is an example corresponding to a composition in which a part of the thermoplastic resin (B) in Experimental Example 7 (Comparative Example) was substituted with a thermoplastic polymer composition (C1) and deflection amount was 18 mm, and flexural modulus was 3,200 MPa. When the thermoplastic polymer composition (C1) is used, deflection amount could be dramatically improved to six times and the flexural modulus could be reduced to 64%.

Further, according to the results in Table 2 and Fig. 1, when TPS was used in a large amount while fixing the amount of the acid-modified PP, deflection amount could be increased and flexural modulus could be reduced (See, Fig. 1).

It was found that when the acid-modified PP was used in a large amount while fixing the amount of TPS, deflection amount could be dramatically increased from the results in Table 2 and Fig. 2. Therefore, it was found that when both TPS and the acid-modified PP were used, deflection amount could be increased and the flexural modulus could be controlled to an adequate value. As compared with a molded article containing only PP and a vegetable material, drastically large deflection can be obtained in the thermoplastic resin composition and molded article and further the molded article can be broken not accumulating excessive stress, being excellent in practical use.

### [INDUSTRIAL APPLICABILITY]

The thermoplastic resin composition and production method thereof, and molded article in the present invention are widely used in fields of an automobile, an architecture and others. In particular, these are useful for an interior material, an exterior material, a structural material and others of an automobile, a railcar, a ship, an aircraft and others. Among them, an automobile supplies including an interior material for automobile, an instrument panel for automobile, an exterior material for automobile and others is favorable. Specific examples are a door base material, a package tray, a pillar garnish, a switch base, a quarter panel, a core material for armrest, a door trim for automobile, a seat-structured material, a seat back board, a ceiling material, a console box, a dashboard for automobile, various instrument panels, a deck trim, a bumper, a spoiler, a cowling and others. Other examples including an interior material, an exterior material and a structural material of an architectural structure, furniture and others are suitable. That is, a door surface material, a door structural material, a surface material and a structural material for various furnitures (desk, chain, shelf, chest, and others), and others are included. Additionally a package, a container (tray and others), a member for protection, a member for partition and others may be included.

## Claims

1. A thermoplastic resin composition **characterized in that** said composition comprises (A) a vegetable material, (B) a thermoplastic resin, and (C) at least one thermoplastic polymer component selected from the group consisting of (C1) a thermoplastic polymer component and (C2) a thermoplastic polymer component, that the content of said vegetable material (A) is in the range from 40% to 95% by weight based on 100% by weight of the total content of said vegetable material (A), said thermoplastic resin (B) and said thermoplastic polymer component (C), that said thermoplastic polymer component (C1) is consisting of a hydrogenated styrene-based thermoplastic elastomer and a maleic anhydride-modified thermoplastic resin, and that said thermoplastic polymer component (C2) is an acid-modified hydrogenated styrene-based thermoplastic elastomer.

2. The thermoplastic resin composition according to Claim 1,
wherein the content of said thermoplastic polymer component (C) is in the range from 1% to 30% by weight.

3. The thermoplastic resin composition according to Claim 1 or 2,
wherein said thermoplastic resin (B) is a polypropylene and/or an ethylene propylene copolymer.

4. The thermoplastic resin composition according to Claim 3,
wherein said maleic anhydride-modified thermoplastic resin is an acid-modified polypropylene having an acid value of 5 or more and a weight-average molecular weight of 10,000 to 200,000.

5. A production method of the thermoplastic resin composition according to any one of Claims 1 to 4, **characterized by** comprising,
a mixing process for mixing said vegetable material (A) with said thermoplastic resin (B) and said thermoplastic polymer component (C) while melting said thermoplastic resin (B) and said thermoplastic polymer component (C) using a mixing melting machine, and
a pelletizing process for pressing the mixture obtained in said mixing process to form a pellet.

6. The production method of the thermoplastic resin composition according to Claim 5,
wherein said mixing melting machine has a mixing chamber for mixing and a mixing blade disposed in said mixing chamber, and
wherein said mixing process is a process in which said thermoplastic resin (B) and said thermoplastic polymer component (C) molten by rotation of said mixing blade and said vegetable material (A) are mixed in said mixing chamber.

7. A molded article **characterized by** being obtained by injection molding of the thermoplastic resin composition according to any one of Claims 1 to 4.

## Patentansprüche

1. Thermoplastische Harzzusammensetzung, **dadurch gekennzeichnet, dass** die Zusammensetzung (A) ein pflanzliches Material, (B) ein thermoplastisches Harz und (C) zumindest eine thermoplastische Polymerkomponente ausgewählt aus der Gruppe bestehend aus (C1) einer thermoplastischen Polymerkomponente und (C2) einer thermoplastischen Polymerkomponente umfasst, dass der Gehalt des pflanzlichen Materials (A) in dem Bereich von 40 Gewichts-% bis 95 Gewichts-% basierend auf 100 Gewichts-% des Gesamtgehalts des pflanzlichen Materials (A), des thermoplastischen Harzes (B) und der thermoplastischen Polymerkomponente (C) ist, dass die thermoplastische Polymerkomponente (C1) aus einem hydrierten Styrol-basierten thermoplastischen Elastomer und einem Maleinsäureanhydrid-modifizierten thermoplastischen Harz besteht und dass die thermoplastische Polymerkomponente (C2) ein Säuremodifiziertes, hydriertes Styrol-basiertes thermoplastisches Elastomer ist.

2. Thermoplastische Harzzusammensetzung nach Anspruch 1,
wobei der Gehalt der thermoplastischen Polymerkomponente (C) in dem Bereich von 1 Gewichts-% bis 30 Gewichts-% ist.

3. Thermoplastische Harzzusammensetzung nach Anspruch 1 oder 2,
wobei das thermoplastische Harz (B) ein Polypropylen und/oder ein Ethylenpropylencopolymer ist.

4. Thermoplastische Harzzusammensetzung nach Anspruch 3,
wobei das Maleinsäureanhydrid-modifizierte thermoplastische Harz ein Säure-modifiziertes Polypropylen mit einem Säurewert von 5 oder mehr und einem gewichtsgemittelten Molekulargewicht von 10000 bis 200000 ist.

5. Herstellungsverfahren für die thermoplastische Harzzusammensetzung nach einem der Ansprüche 1 bis 4, **gekennzeichnet durch** das Umfassen,
eines Mischprozesses zum Mischen des pflanzlichen Materials (A) mit dem thermoplastischen Harz (B) und der thermoplastischen Polymerkomponente (C), während das thermoplastische Harz (B) und die thermoplastische Polymerkomponente (C) unter Verwendung einer Mischschmelzmaschine schmelzen, und
eines Pelletisierungsprozesses zum Pressen der in dem Mischprozess erhaltenden Mischung, um ein Pellet zu bilden.

6. Herstellungsverfahren für die thermoplastische Harzzusammensetzung nach Anspruch 5,
wobei die Mischschmelzmaschine eine Mischkammer zum Mischen und ein Mischblatt, dass in der Mischkammer angeordnet ist, aufweist, und
wobei der Mischprozess ein Prozess ist, in welchem das thermoplastische Harz (B) und die thermoplastische Polymerkomponente (C), die durch Rotation des Mischblatts schmelzen, und das pflanzliche Material (A) in der Mischkammer gemischt werden.

7. Formteil, **dadurch gekennzeichnet, dass** es durch Spritzgießen der thermoplastischen Harzzusammensetzung nach einem der Ansprüche 1 bis 4 erhalten ist.

## Revendications

1. Composition de résine thermoplastique **caractérisée en ce que** ladite composition comprend (A) un matériau végétal, (B) une résine thermoplastique, et (C) au moins un composant polymère thermoplastique choisi dans le groupe constitué de (C1) un composant polymère thermoplastique et (C2) un composant polymère thermoplastique, **en ce que** la teneur dans ledit matériau végétal (A) est dans la plage de 40 % à 95 % en poids, sur la base de 100 % en poids de la teneur totale dans ledit matériau végétal (A), ladite résine thermoplastique (B) et ledit composant polymère thermoplastique (C), **en ce que** ledit composant polymère thermoplastique (C1) est constitué d'un élastomère thermoplastique à base de styrène hydrogéné et d'une résine thermoplastique modifiée en anhydride maléique et **en ce que** ledit composant polymère thermoplastique (C2) est un élastomère thermoplastique à base de styrène hydrogéné modifié en acide.

2. Composition de résine thermoplastique selon la revendication 1, dans laquelle la teneur dans ledit composant polymère thermoplastique (C) est dans la plage de 1 % à 30 % en poids.

3. Composition de résine thermoplastique selon la revendication 1 ou 2, dans laquelle ladite résine thermoplastique (B) est un polypropylène et/ou un copolymère d'éthylène propylène.

4. Composition de résine thermoplastique selon la revendication 3, dans laquelle ladite résine thermoplastique modifiée en anhydride maléique est un polypropylène modifié en acide ayant une valeur d'acide de 5 ou plus et une masse moléculaire moyenne en poids de 10 000 à 200 000.

5. Procédé de production de la composition de résine thermoplastique selon l'une quelconque des revendications 1 à 4, **caractérisé en ce qu'**il comprend
un procédé de mélange pour mélanger ledit matériau végétal (A) avec ladite résine thermoplastique (B) et ledit composant polymère thermoplastique (C) tout en faisant fondre ladite résine thermoplastique (B) et ledit composant polymère thermoplastique (C) en utilisant une machine de fusion par mélange, et
un procédé de pelletisation pour comprimer le mélange obtenu dans ledit procédé de mélange pour former un pellet.

6. Procédé de production de la composition de résine thermoplastique selon la revendication 5,
dans lequel ladite machine de fusion par mélange a une chambre de mélange permettant de mélanger et une lame de mélange disposée dans ladite chambre de mélange, et
dans lequel ledit procédé de mélange est un procédé dans lequel ladite résine thermoplastique (B) et ledit composant polymère thermoplastique (C) fondus par rotation de ladite lame de mélange et ledit matériau végétal (A) sont mélangés dans ladite chambre de mélange.

7. Article moulé **caractérisé en ce qu'**il est obtenu par un moulage par injection de la composition de résine thermoplastique selon l'une quelconque des revendications 1 à 4.
